Europäisches Patentamt

European Patent Office

Office européen des brevets

(11) Veröffentlichungsnummer: **0 227 587**
**B1**

(12) **EUROPÄISCHE PATENTSCHRIFT**

(45) Veröffentlichungstag der Patentschrift:
**16.05.90**

(51) Int. Cl.⁵: **H02B 11/02**

(21) Anmeldenummer: **86730205.1**

(22) Anmeldetag: **05.12.86**

(54) **Elektrisches Schaltgerät mit zum Verfahren innerhalb einer Schaltzelle dienenden Führungsmitteln.**

(30) Priorität: **20.12.85 DE 3545781**

(43) Veröffentlichungstag der Anmeldung:
**01.07.87 Patentblatt 87/27**

(45) Bekanntmachung des Hinweises auf die Patenterteilung:
**16.05.90 Patentblatt 90/20**

(84) Benannte Vertragsstaaten:
**DE FR GB IT SE**

(56) Entgegenhaltungen:
**DE-A- 1 640 134**
**FR-A- 1 485 491**
**US-A- 2 273 001**

(73) Patentinhaber: **Siemens Aktiengesellschaft,
Wittelsbacherplatz 2, D-8000 München 2(DE)**

(72) Erfinder: **Bohnen, Peter, Solmstrasse 22,
D-1000 Berlin 61(DE)**

## Beschreibung

Die Erfindung betrifft ein elektrisches Schaltgerät mit zum Verfahren innerhalb einer Schaltzelle dienenden Führungsmitteln und mit einer Einrichtung zur lösbaren Kupplung des Schaltgerätes mit einem eine Gewindespindel aufweisenden Verstellantrieb. Ein Schaltgerät dieser Art ist beispielsweise durch die US-A 4 112 269 bekannt geworden. Hierbei dienen seitlich des Schaltgerätes angeordnete Rollen und Schienen als Führungsmittel. Die gleiche Bauform des verwendeten Schaltgerätes ist jedoch nicht unmittelbar auch für den festen Einbau in eine Schaltanlage oder Schaltzelle geeignet.

Auch bei einer Schaltanlage nach der US-A 2 273 001 hat das verfahrbar angeordnete Schaltgerät eine Bauform, die speziell auf das Verfahren in einer Schaltzelle ausgerichtet ist. Dies trifft, jedoch mit abweichender Gestaltung der zum Verfahren dienenden Bauteile, auch für eine Schalteranordnung nach der FR-A 1 485 491 (entspricht DE-A 1 515 568) zu.

Hiervon ausgehend liegt der Erfindung die Aufgabe zugrunde, ein Schaltgerät so zu gestalten, daß es bei möglichst einfachem Aufbau seines Gehäuses für den festen Einbau in eine Schaltanlage oder eine Schaltzelle geeignet ist und auf einfache Weise in eine Ausführung für verfahrbare Anordnung umgerüstet werden kann und dann mit einem Verstellantrieb kuppelbar ist.

Gemäß der Erfindung ist hierzu vorgesehen, daß das Schaltgerät an seinen Seitenwänden abstehende Fußwinkel besitzt, an denen mit Gleitflächen versehene Profilschienen lösbar befestigt sind, die je eine Kupplungsklaue zur Kupplung des Schaltgerätes mit dem Verstellantrieb aufweisen.

Für die feste Montage eines Schaltgerätes sind die Fußwinkel besonders geeignet, da sie auch bei schweren Schaltgeräten eine angemessene Standfläche bieten und zur Anbringung von Befestigungsmitteln gut zugänglich sind. Solche Fußwinkel sind gleichermaßen gut zur Anbringung der Profilschienen geeignet, so daß ein einfacher Teilesatz zur Umrüstung eines Schaltgerätes für fahrbare Anordnung ausreicht. Durch die Profilschienen wird der Abstand der Unterseite des Schaltgerätes von dem Fahrboden vergrößert, wodurch die Bodenfläche eines Einschubrahmens oder einer Schaltzelle zugleich als Fahrboden für das Schaltgerät und als Montagefläche für den Verstellantrieb und hiermit zusammenwirkende Teile benutzt werden kann.

Der Verstellantrieb kann in diesem Zusammenhang vorzugsweise so ausgebildet sein, daß eine durch die Gewindespindel des Verstellantriebes parallel zur Frontseite des Schaltgerätes bewegbare Traverse zwei beidseitig überstehende Kupplungsbolzen besitzt. Dies führt zu einer vorteilhaften Anbringung der Kupplungsklaue gleichfalls an der Frontseite der Profilschienen und damit an der Frontseite des Schaltgerätes, wodurch eine günstige Zugangsmöglichkeit geschaffen ist.

Zur leichten Betätigung von Hand kann jede Kupplungsklaue eine frontseitige Abwinklung mit einem in Richtung des Fahrbodens des Schaltgerätes weisenden Zapfen besitzen. Als Gegenstück für den Zapfen kann am Fahrboden ein Sperrstück angebracht sein, dessen Höhe dem Abstand des Zapfens vom Fahrboden entspricht und das den Fahrweg bis zur Trennstellung überdeckt. Somit ist die Kupplungsklaue gegen eine Betätigung von Hand solange gesperrt, bis das Schaltgerät seine Trennstellung erreicht hat und somit alle elektrischen Verbindungen zwischen dem Schaltgerät und dem ortsfesten Teil der Schaltzelle bzw. des Einschubrahmens unterbrochen sind. Werden die Kupplungsklauen dann mittels Abwinklungen betätigt, so wird die Kupplung zwischen dem Verstellantrieb und dem Schaltgerät gelöst und das Schaltgerät kann aus der Schaltzelle bzw. dem Einschubrahmen herausgenommen werden.

Durch die Kupplungsklauen wird eine kraftschlüssige Verbindung zwischen dem Schaltgerät und dem Verstellantrieb geschaffen, die in der Richtung des Fahrweges wirkt. Es kann jedoch darüberhinaus erwünscht sein, das Schaltgerät auch vertikal hierzu zu führen, beispielsweise um ein ordungsgemäßes Zusammenwirken zwischen rückseiten Anschlußschienen des Schaltgerätes und ortsfesten Trennkontaktanordnungen zu gewährleisten. Nach einer Weiterbildung der Erfindung kann diese Führung dadurch geschaffen werden, daß Wangen, die Langlöcher zur Führung der Traverse mittels der Kupplungsbolzen besitzen, an ihrem hinteren der Rückseite des Schaltgerätes zugeordneten Enden jeweils ein Widerlager für ein zum Eingreifen in ein einseitiges offenes Langloch jeder Seitenwand des Schaltgerätes vorgesehenen Haltebolzen bildet. Die Länge dieser Langlöcher oder Führungsschlitze braucht nur dem zwischen der Trennstellung und der Betriebsstellung des Schaltgerätes zurückzulegenden Fahrweg zu entsprechen, der bei einer Niederspannungs-Schaltanlage nur wenige cm beträgt.

Die Erfindung wird im folgenden anhand des in den Figuren dargestellten Ausführungsbeispieles näher erläutert.

Die Figur 1 zeigt in einer Frontansicht einen Teil eines Einschubrahmens mit einem darin eingesetzten Schaltgerät.

Die Figur 2 zeigt Teile eines Verstellantriebes und angrenzende Teile eines Schaltgerätes in einer Seitenansicht.

Die Figuren 3 und 4 zeigen in einer Seitenansicht und einer Draufsicht eine Gleitschiene mit einer daran angebrachten Kupplungsklaue.

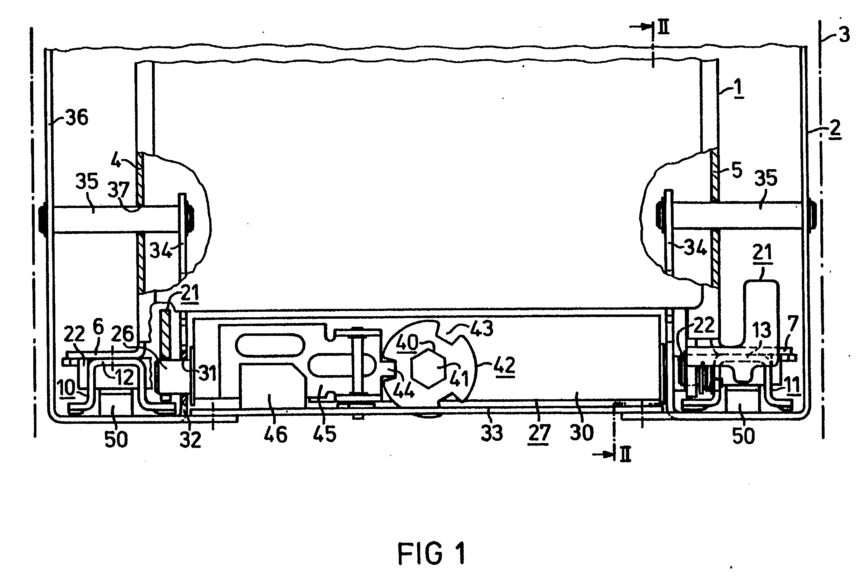

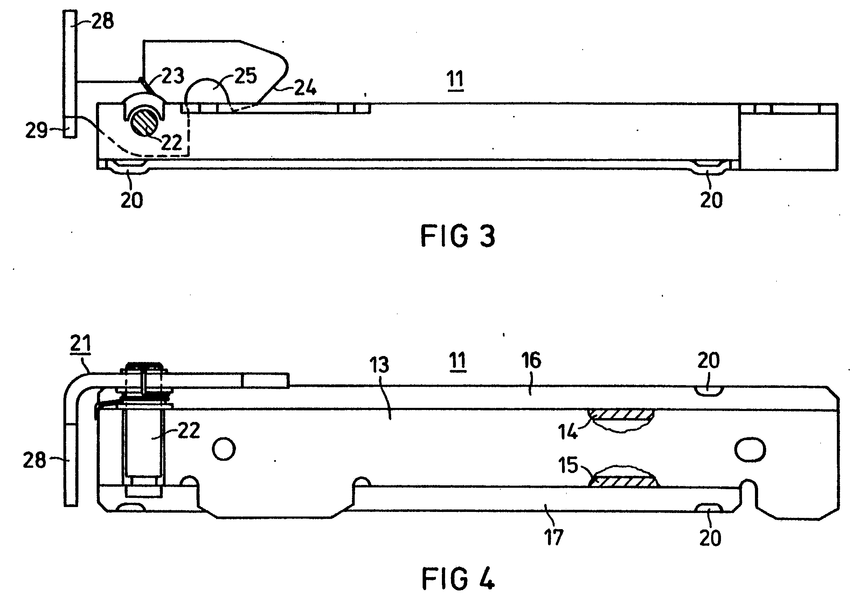

Als Beispiel für ein Schaltgerät zeigt die Figur 1 schematisch einen Niederspannungs-Leistungsschalter 1, der in einen Einschubrahmen 2 eingesetzt ist. Der Einschubrahmen 2 ist seinerseits in einer Schaltzelle 3, beispielsweise einem Gerüst, einem Schaltschrank oder einem ähnlichen Tragwerk untergebracht. Seitenwände 4 und 5 des Leistungsschalters 1 sind, beispielsweise durch Abkantung, mit rechtwinklig nach außen abstehenden Fußwinkeln 6 und 7 versehen, an denen Gleitschienen 10 und 11 befestigt sind. Dies kann beispielsweise durch Schrauben geschehen, die die Fußwinkel 6 und 7 und die Mittelteile 12 und 13 der Gleitschienen 10 und 11 durchsetzen. Die Gleitschienen 10 und 11 sind spiegelbildlich ausgebildet, so daß es ausreicht, im folgenden die Merkmale der Gleitschiene 11 anhand der Figuren 3 und 4 zu erläutern.

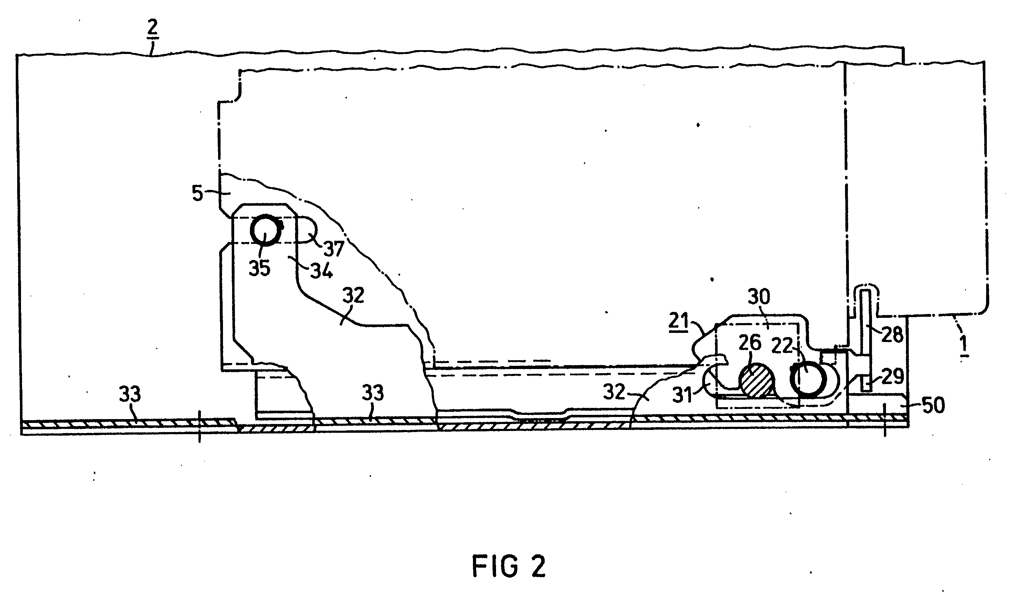

Die Schenkel 14 und 15 der Gleitschiene 11 besitzen nach außen weisende Abwinklungen 16 und 17 mit herausgedrückten Gleitnasen 20, die unmittelbar auf dem Boden des Einschubrahmens 2 gleiten. Ein üblicher Schmierstoff ist ausreichend, auch Leistungsschalter mit verhältnismäßig großem Gewicht ohne großen Kraftaufwand verfahren zu können. Am vorderen Ende trägt die Gleitschiene 11 eine Kupplungklaue 21, die auf einem Lagerbolzen 22 schwenkbar ist, der in eine Ausnehmung des Mittelteiles 13 und der Schenkel 14 und 15 einlegbar ist. Eine obere Abdeckung benötigt diese Lageröffnung nicht, da bei der Montage der Fußwinkel 7 des Leistungsschalters die Lageröffnung verschließt. Eine Drehfeder 23 spannt die Kupplungklaue 21 im Uhrezeigersinn bezüglich der Figur 2 vor. Eine Anlaufschräge 24 mündet in eine Ausnehmung 25, die einem Kupplungsbolzen 26 eines in der Figur 1 teilweise gezeigten Verstellantriebes 27 angepaßt ist.

Der Verstellantrieb 27 umfaßt eine Traverse 30, die mittels beidseitig überstehender Kupplungsbolzen 26 in Langlöchern 31 von Wangen 32 geführt ist, die rechtwinklig zu einer Bodenplatte 33 stehen, die den Fahrboden für den Leistungsschalter 1 bildet. An ihrem hinteren Ende bilden die Wangen 32 ein Widerlager 34 für einen Haltebolzen 35, dessen dem Widerlager 34 gegenüberliegenden Ende in einer Seitenwand 36 des Einschubrahmens 2 eingreift. Ein zur Rückseite des Leistungsschalters 1 offenes Langloch 37 greift über den zugeordneten Haltebolzen 35, wenn der Leistungsschalter 1 in den Einschubrahmen 1 eingefahren wird (Figur 2).

Zur Bewegung der Traverse 30 dient eine Gewindespindel 40, deren bedienungsseitigen Kopfstück 41 als Sechskant ausgebildet ist. Gleichfalls am bedienungsseitigen Ende der Gewindespindel 40 befindet sich eine Nutenscheibe 42, in deren Ausnehmungen 43 ein Riegelzapfen 44 eines Riegels 45 eingreifen kann. Durch einen Entsperrungsschieber 46 ist der Riegel 45 in Figur 1 nach links verschiebbar, um die Riegelnase 44 aus der betreffenden Ausnehmung 43 der Nutenscheibe 42 auszuheben.

Beim Einsetzen des Leistungsschalters 1 in den Einschubrahmen 2 wird dieser mit den Gleitschienen 10 und 11 auf der Bodenplatte 33 des Einschubrahmens 2 abgesetzt und kann dann soweit in den Einschubrahmen hineingeschoben werden, bis die Kupplungsklauen mit ihren Anlaufschrägen 24 auf die Kupplungsbolzen 26 gelangen und diese mit ihren Ausnehmungen 25 übergreifen. Dabei gelangen auch die Haltebolzen 35 in die Langlöcher der Seitenwände 4 und 5 des Leistungsschalters 1. Die weitere Bewegung des Leistungsschalters 1 ist durch Drehung der Gewindespindel 40 vorzunehmen.

Nur in der Trennstellung sind die zur Handbetätigung vorgesehenen Abwinklungen 28 der Kupplungsklauen 21 zu betätigen, weil beim Verfahren des Leistungsschalters 1 an der Unterkante der Abwinklungen 28 befindliche Zapfen 29 in den Bereich von Sperrstücken 50 gelangen, die auf der Bodenplatte 33 des Einschubträgers 2 angeordnet sind und die von den Schenkeln 14 und 15 der Gleitschiene 11 und sinngemäß von den Schenkeln der Gleitschiene 10 übergriffen werden. Hierdurch ist eine Sicherung dagegen geschaffen, daß der Leistungsschalter 1 in gefahrbringender Weise von dem Verstellantrieb gelöst werden kann.

**Patentansprüche**

1. Elektrisches Schaltgerät (1) mit zum Verfahren innerhalb einer Schaltzelle (3) dienenden Führungsmitteln (10, 11, 33) und mit einer Einrichtung zur lösbaren Kupplung des Schaltgerätes (1) mit einem eine Gewindespindel (40) aufweisenden Verstellantrieb (27), dadurch gekennzeichnet, daß das Schaltgerät (1) an seinen Seitenwänden (4, 5) abstehende Fußwinkel (6, 7) besitzt, an denen mit Gleitflächen (16, 17, 20) versehene Profilschienen (10, 11) lösbar befestigt sind, die je eine Kupplungsklaue (21) zur Kupplung des Schaltgerätes (1) mit dem Verstellantrieb (27) aufweisen.

2. Schaltgerät nach Anspruch 1, dadurch gekennzeichnet, daß der Verstellantrieb (27) eine durch die Gewindespindel (40) parallel zur Frontseite des Schaltgerätes (1) bewegbare Traverse (30) mit zwei beidseitig überstehenden Kupplungsbolzen besitzt.

3. Schaltgerät nach Anspruch 2, dadurch gekennzeichnet, daß die Kupplungsklaue (21) an der Profilschiene (10, 11) schwenkbar gelagert ist und mit einer dem Kupplungsbolzen (26) angepaßten Ausnehmung (25) sowie mit einer in diese mündenden Anlaufschräge (24) für den Kupplungsbolzen (26) versehen ist.

4. Schaltgerät nach Anspruch 3, dadurch gekennzeichnet, daß jede Kupplungsklaue (21) zur Betätigung von Hand eine frontseitige Abwinklung (28) mit einem in Richtung des Fahrbodens (Bodenplatte 33) des Schaltgerätes (1) weisenden Zapfen (29) besitzt.

5. Schaltgerät nach Anspruch 4, dadurch gekennzeichnet, daß an dem Fahrboden (Bodenplatte 33) für das Schaltgerät (1) ein Sperrstück (50) angebracht ist, dessen Höhe dem Abstand des Zapfens (29) der Kupplungsklaue (21) vom Fahrboden entspricht und das den Fahrweg bis zur Trennstellung überdeckt.

6. Schaltgerät nach Anspruch 2, dadurch gekennzeichnet, daß die Traverse (30) mittels der Kupplungsbolzen (26) in Langlöchern (31) von rechtwinklig zum Fahrboden (33) stehenden Wangen (32) geführt ist und daß die Wangen (32) an ihrem hinteren, der Rückseite des Schaltgerätes (1) zugeordneten Ende jeweils ein Widerlager (34) für einen zum Eingreifen in ein einseitig offenes Langloch (37) jeder Seitenwand (4, 5) des Schaltgerätes (1) vorgesehenen Haltebolzen (35) bildet.

**Claims**

1. Electrical switch device (1) with guide means (10, 11, 33) which serve for moving it within a switch cell (3) and with an arrangement for releasable coupling of the switch device (1) to an adjustment drive (27) having a threaded spindle (40), characterised in that the switch device (1) has projecting angled feet (6, 7) on its side walls (4, 5), and profiled rails (10, 11) provided with sliding surfaces (16, 17, 20) are releasably fixed on the said angled feet and each rail has a coupling catch (21) for coupling the switch device (1) to the adjustment drive (27).

2. Switch device according to claim 1, characterised in that the adjustment drive (27) has a crosspiece (30) which is movable by means of the threaded spindle (40) parallel to the front side of the switch device (1) with two coupling bolts which project on both sides.

3. Switch device according to claim 2, characterised in that the coupling catch (21) is pivotably mounted on the profiled rail (10, 11) and is provided with a recess (25) adapted to the coupling bolt (26) and an incline (24), leading to said recess, for the coupling bolt (26).

4. Switch device according to claim 3, characterised in that for manual actuation each coupling catch (21) has a bent piece (28) on the front side with a pin (29) pointing in the direction of the movable base (base plate 33) of the switch device (1).

5. Switch device according to claim 4, characterised in that a blocking piece (5), the height of which corresponds to the distance of the pin (29) of the coupling catch (21) from the movable base and which covers the travel path as far as the isolation point, is mounted on the movable base (base plate 33) for the switch device (1).

6. Switch device according to claim 2, characterised in that the crosspiece (30) is guided by means of the coupling bolts (26) in elongate slots (31) of side walls (32) which are at right angles to the movable base (33), and on their rear ends associated with the rear side of the switch device (1) the side walls (32) each form a support (34) for a holding bolt (35) which is provided for engagement in an elongate slot (37), which is open on one side, in each side wall (4, 5) of the switch device (1).

**Revendications**

1. Appareil de coupure électrique (1) comportant des moyens de guidage (10, 11, 33), servant à le déplacer à l'intérieur d'une cellule de coupure (3), et un dispositif servant à accoupler de façon détachable l'appareil de coupure (1) à un dispositif de commande du déplacement (27) comportant une broche filetée (40), caractérisé par le fait que l'appareil de coupure (1) possède des cornières de base (6, 7), qui font saillie sur ses parois latérales (4, 5) et sur lesquelles sont fixés de façon amovible des rails profilés (10, 11), qui sont pourvus de surfaces de glissement (16, 17, 20) et qui possèdent chacun une griffe d'accouplement (21) servant à réaliser l'accouplement de l'appareil de coupure (1) avec le dispositif de commande de déplacement (27).

2. Appareil de coupure suivant la revendication 1, caractérisé par le fait que le dispositif de commande du déplacement (27) possède une traverse (30), qui peut être déplacée par la broche filetée (40) parallèlement à la face avant de l'appareil de coupure (1) et comporte deux axes d'accouplement qui font saillie des deux côtés.

3. Appareil de coupure suivant la revendication 2, caractérisé par le fait que la griffe d'accouplement (21) est montée pivotante sur le rail profilé (10, 11) et comporte un évidement (25) adapté au boulon d'accouplement (26), et une rampe de montée (24), qui débouche dans cet évidement, pour l'axe d'accouplement (26).

4. Appareil de coupure suivant la revendication 3, caractérisé par le fait que chaque griffe d'accouplement (21) possède, pour son actionnement manuel, une partie coudée frontale (28) possédant un appendice saillant (29) tourné en direction de la base de déplacement (plaque de base 33) de l'appareil de coupure (1).

5. Appareil de coupure suivant la revendication 4, caractérisé par le fait que sur la base de déplacement (plaque de base 33) pour l'appareil de coupure (1) se trouve disposée une pièce de blocage (50), dont la hauteur correspond à la distance entre l'appendice saillant (29) de la griffe d'accouplement (21) et la base de déplacement et qui recouvre le trajet de déplacement jusqu'à la position de séparation.

6. Appareil de coupure suivant la revendication 2, caractérisé par le fait que la traverse (30) est guidée au moyen des axes d'accouplement (26) dans des trous allongés (31), ménagés dans des flasques (32) perpendiculaires à la base de déplacement (33), et que les flasques (32) forment, sur leur extrémité arrière, associée à la face arrière de l'appareil de coupure (1), respectivement une butée (34) pour une tige de retenue (35) destinée à s'engager dans un trou allongé (37), ouvert latéralement, de chaque paroi latérale (4, 5) de l'appareil de coupure (1).

FIG 1

FIG 2

EP 0 227 587 B1

EP 0 227 587 B1

FIG 3

FIG 4